# EUROPÄISCHE PATENTANMELDUNG

(11) **EP 1 522 444 A2**
(43) Veröffentlichungstag der Anmeldung: **13.04.2005**
(21) Anmeldenummer: 04023241.5
(22) Anmeldetag: 29.09.2004
(51) Int. Cl.: B60J 10/00

(54) **Handgerät zum Montieren von Dichtungsprofilen**

(30) Priorität: 07.10.2003 DE 10346582
(71) Anmelder: Armacell Enterprise GmbH, 48153 Münster (DE)
(72) Erfinder: Karl, Reinhard, 88171 Weiler (DE); Kuisle, Harald, 88299 Leutkirch (DE)
(74) Vertreter: Finck, Dieter

(57) **Zusammenfassung**

Das Handgerät (21) dient zum Aufbringen von einen Rücken und zwei Lippen aufweisenden Schutzprofilen (22) aus elastischem Material auf Kanten (24) von zu schützenden Gegenständen (23). Er hat zwei mit festgelegtem Abstand parallel aneinander befestigte Seitenwangen (26), einen Handgriff (25) und zwischen den Seitenwangen (21) schutzprofilauslaufseitig oben eine Einrichtung (32) zum Führen und Anpressen des Schutzprofils (22) auf die Kante (24) und unten eine Einrichtung (33) zum Öffnen des Schutzprofils in Form eines Keilelements (34) sowie unterhalb des Keilelements (34) eine eine Führungsseite aufweisende Einrichtung (37) zum Führen des Handgeräts (21) an der Kante (24). Das Keilelement (34) hat einen breiten Teil (35), der an den Seitenwangen (26) befestigt ist, und einen schmalen Teil (36), der in einem Abstand von der Einrichtung (32) zum Führen und Anpressen des Schutzprofils (22) angeordnet ist, der im Minimum der Stärke des Rückens des Schutzprofils (22) entspricht. Das Keilelement (34) endet vor der Tangente, die sich zwischen der Innenseite des Rückens des Schutzprofils (22) und der Führungsseite der Einrichtung (37) zum Führen des Handgeräts (21) an der Kante (24) erstreckt.

## Beschreibung

Die Erfindung betrifft ein Handgerät für das Aufbringen eines Schutzprofils aus elastischem Material auf Kanten eines zu schützenden Gegenstandes nach dem Oberbegriff des Anspruchs 1.

Bei einem solchen aus der GB 15 88 213 A bekannten Handgerät, besteht die schutzprofileinlaufseitige Führungseinrichtung für das Schutzprofil aus einem zwischen den Seitenwangen ausgebildeten Führungskanal, der der U-Querschnittsform des Schutzprofils so angepasst ist, dass das Schutzprofil hindurchgeführt werden kann, ohne sich zu verdrehen. Aus diesem Grund ragt von der einen Kanalwand eine Trennwand in das Schutzprofil durch dessen offene Seite hinein. An der die Bordscheiben aufweisenden Rolle sind radial vorstehende Nadeln vorgesehen, die in den Rücken des Schutzprofils für dessen Vorwärtsbewegung bei der Drehung der Rolle eingreifen. Unterhalb dieser die Nadeln aufweisenden Rolle sind an den Seitenwangen Führungsplatten angeordnet, die in Kontakt mit den Seitenwänden eines zu schützenden Gegenstandes in Form einer Scheibe stehen, auf deren Kante beziehungsweise Rand das Schutzprofil aufgebracht wird. Wenn das Handgerät auf dem Scheibenrand so angeordnet ist, dass das Schutzprofil auf ihm aufgebracht werden kann, bildet die Führungsachse des Führungskanals einen spitzen Winkel mit dem Rand der Scheibe. Im Bereich dieses spitzen Winkels ist an den Seitenwangen eine Führungsrolle mit einer Aussparung vorgesehen, die der Dicke der Scheibe entspricht, so dass die Ränder der Führungsrolle den Rand der Scheibe übergreifen. In der dem Rücken des Schutzprofils zugewandten Fläche des Führungskanals ist eine Aussparung vorgesehen, in die eine Sperrklinke eingreift, die durch Betätigung eines Griffs das Zurückziehen des Schutzprofils aus dem Führungskanal heraus freigibt. Zwischen diesem Betätigungsgriff und der Scheibe ist an dem Handgerät ein Handgriff vorgesehen. Dem Betätigungsgriff ist ein Gestänge zugeordnet, an dem ein Messerblatt sitzt, das in einen Schlitz im Führungskanal zum Abschneiden des Schutzprofils bei Betätigung des Betätigungsgriffs eingreifen kann. Der das Abschneiden ermöglichende Schlitz ist dabei in der Seite des Führungskanals vorgesehen, in der sich auch die Aussparung für die Sperrklinke befindet. Das Aufbringen von Schutzprofilen unterschiedlicher Abmessungen auf Ränder von zu schützenden Gegenständen unterschiedlicher Dicke ist mit dem bekannten Handgerät nicht möglich.

Aus der DE 41 04 342 C1 ist ein Handgerät zum Montieren eines Dichtungsprofils in einer Haltenut mit Gehrungsecken bekannt, das einen durchgehenden geschlossenen Führungskanal für das Dichtungsprofil aufweist. Zum Ausstanzen eines Teils des Dichtungsprofils oder zum Abschneiden des Dichtungsprofils ist an dem Handgerät ein Stanzwerkzeug vorgesehen, das senkrecht zum Führungskanal in diesen hineinbewegbar ist. Das Stanzwerkzeug ist um eine parallel zur Bewegungsrichtung des Stanzmessers liegende Achse drehbar und ist in mindestens zwei Drehpositionen arretierbar. Es hat Markierungen oder Anschläge zur Anzeige der Sollposition für den Gehrungs- und den Stumpfschnitt. Handgerätauslaufseitig ist eine Andrückrolle vorgesehen, die das Dichtungsprofil in die Haltenut fortlaufend einrollt. Das Handgerät weist ferner einen Schleppanker mit Widerhaken auf, die so angeordnet sind, dass das Dichtungsprofil nur in eine Richtung bewegt werden kann. Zum Führen des Handgeräts auf einer Kante des Gegenstands, auf den die Dichtung aufzubringen ist, hat das Handgerät eine Gleitkante. Dadurch, dass ein Führungskanal in dem Handgerät vorgesehen ist, ist das Handgerät nur zusammen mit Dichtungsprofilen mit gleichen Abmessungen verwendbar.

Zum Stand der Technik gehört ferner ein Handgerät (ausgeliefert von NMC, Raeren, Belgien) für das Aufbringen von im wesentlichen U-förmigen, einen Rücken und zwei Rippen aufweisenden Schutzprofilen aus elastischem Material auf Kanten von zu schützenden Gegenständen. Dieses Handgerät hat zwei mit festgelegtem Abstand parallel aneinander befestigte Seitenwangen, von denen jede die Form eines Trapezes mit einer langen parallelen Trapezseite, mit einer kurzen parallelen Trapezseite und mit einer schutzprofileinlaufseitigen Trapezseite sowie einer schutzprofilauslaufseitigen Trapezseite aufweist. Mit den Seitenwangen ist ein Handgriff verbunden. Zwischen den Seitenwangen ist im Bereich der langen parallelen Trapezseite und der schutzprofilauslaufseitigen Trapezseite eine Einrichtung zum Führen und Anpressen des Schutzprofils auf die Kante angeordnet. Das Handgerät hat ferner eine im Bereich der kurzen parallelen Trapezseite von der schutzprofilauslaufseitigen Trapezseite der Seitenwangen angeordnete Einrichtung zum Öffnen des Schutzprofils, die aus einer schmalen drehbaren Kreisscheibe besteht, die sehr nahe an der von einer Rolle mit seitlichen Bordscheiben gebildeten Einrichtung zum Führen und Anpressen des Schutzprofils an die Kante angeordnet ist, was einen großen Abbiegewinkel des Schutzprofils bei dessen Aufbringen auf die Kante des zu schützenden Gegenstands ergibt. Dieser große Abbiegewinkel führt dazu, dass sich das Profil aufgrund seiner Rückstellkräfte schließen möchte und dabei das Aufbringen auf die Kante sehr schwierig macht und nach einer bestimmten Länge vollständig unterbindet. Die Führung des Handgeräts bezüglich der Kante des zu schützenden Gegenstands erfolgt mit Hilfe des Profils und durch die Rolle mit den Bordscheiben. Eine solche Führung ist sehr instabil.

Bei dem bekannten Handgerät ist der Griff an den Seitenwangen auf deren kurzen parallelen Trapezseiten angebracht, was für die Bedienungsperson das Arbeiten mit dem Handgerät erschwert. Ferner ist für bestimmte Profilformen die exakte Führung in dem Handgerät nicht gewährleistet, so dass es zu einem Verdrehen des Schutzprofils kommen kann, wodurch die Führung durch die Kreisscheibe nicht mehr gegeben ist. Schneid- bzw. Ausklinkeinrichtungen sowie Rückzugsicherungen sind nicht vorhanden.

Die der Erfindung zugrundeliegende Aufgabe besteht deshalb darin, dass Handgerät der eingangs genannten Art für eine einfache Betätigung so auszubilden, dass ein kontinuierliches Aufbringen von Schutzprofilen unterschiedlicher Art auf unterschiedlich breite Kanten oder Ränder der zu schützenden Gegenstände ohne die Gefahr einer Beschädigung der Kante gewährleistet ist.

Diese Aufgabe wird ausgehend von dem Handgerät der eingangs beschriebenen Art durch die im kennzeichnenden Teil des Anspruchs 1 angegebenen Merkmale gelöst.

Mit dem erfindungsgemäßen Handgerät lassen sich in Anpassung an die jeweilige Dicke von zu schützenden Gegenständen unterschiedlich bemessene Schutzprofile aus elastischem Material, die einen in ihrer Längsrichtung verlaufenden Einführungsschlitz für die Aufnahme der Kante des zu schützenden Gegenstandes haben, kontinuierlich und sicher geführt mit geringem Kraftaufwand seitens der Bedienungsperson auf die Kante beziehungsweise dem Rand des zu schützenden Gegenstandes aufbringen, wobei das Handgerät auch an den Kanten beziehungsweise auf den Rändern der zu schützenden Gegenstände mit unterschiedlicher Dicke jeweils sicher geführt wird.

Die Ausführung des Handgeräts nach Anspruch 2 ermöglicht eine einfache Anpassung an unterschiedliche Schutzprofilausgestaltungen.

Aufgrund der gemäß Anspruch 3 ausgebildeten Schneideinrichtung, die dem Handgerät direkt zugeordnet ist, erhält man Schneidflächen mit gleicher Ausrichtung, so dass die Schneidflächen an den Enden des Schutzprofils deckungsgleich aufeinander passen.

Durch die äußerst einfache Ausgestaltung der Rückzugsicherung nach Anspruch 4 wird dem Herausziehen des Schutzprofils aus dem Handgerät ein Widerstand entgegengesetzt, der ein Lösen des einlaufseitigen Schutzprofilteils nach dem Abschneiden des auslaufseitigen Schutzprofilteils verhindert.

Das Handgerät nach Anspruch 5 gewährleistet ein messerschonendes, verzugs- und verformungsfreies Abschneiden des Schutzprofils.

Bei der Ausgestaltung nach Anspruch 6 sorgen die beiden Rückzugsicherungseinrichtungen, die einander gegenüberliegen, für eine Zentrierung des Schutzprofils und wirken gleichzeitig einem Verdrehen des Schutzprofils innerhalb des Handgeräts entgegen.

Die Ausgestaltung des Handgeräts nach Anspruch 7 sorgt für ein einlaufseitiges Öffnen des Schutzprofils und trägt gleichzeitig dazu bei, ein Verdrehen des Profils innerhalb des Handgeräts zu verhindern. Durch die vertikale Verstellbarkeit der Leitrollen ist eine einfache Anpassung an unterschiedliche Rückenstärken von Schutzprofilen möglich.

Dabei sorgt die Ausgestaltung nach Anspruch 8 für eine Anpassung an unterschiedliche Profilgrößen, wobei die Seitenwangen relativ weit voneinander entfernt sein können und dadurch den Durchlauf auch sehr breiter Profile ermöglichen, ohne dass deren stabile Führung gefährdet wird.

Es kommt häufig vor, dass das Schutzprofil beim Führen um die Kanten eines zu schützenden Gegenstands auch über Ecken und scharfe Biegungen geführt werden muss. Um dies einwandfrei zu gewährleisten, ist in der Ausgestaltung nach Anspruch 9 das Ausklinken von Segmenten aus den den Einführungsschlitz begrenzenden Lippen des Schutzprofils in einfacher Weise möglich. Dadurch können immer an den gewünschten Stellen die Segmente in den als Endlosware gelieferten Schutzprofilen ausgeklinkt werden, so dass eine entsprechende Vorkonfektionierung mit den damit verbundenen Nachteilen entfällt. Die Segmente können in direkter Betätigung am Handgerät einfach ausgeklinkt werden. Die Ausklinkeinrichtung kann an dem Handgerät in einem Stück oder als Ansatzteil ausgeführt werden, wobei im letzteren Fall dann schutzprofileinlaufseitig eine weitere Einrichtung zum Öffnen des Schutzprofils vorgesehen werden muss.

Mit dem Handgerät in der Ausgestaltung nach Anspruch 10 und 11 lassen sich die Messer einfach betätigen.

Die Form des Handgeräts nach Anspruch 12 ist äußerst ergonomisch, so dass das Handgerät von der Bedienungsperson bequem in unterschiedlichsten Stellungen eingesetzt werden kann.

Das Handgerät in der Ausgestaltung nach Anspruch 13 kann auch beim Aufbringen eines Isolierschlauchs auf ein zu isolierendes Rohr zum Einsatz kommen, wobei in diesem Fall das Schutzprofil der Isolierschlauch ist und die Kante von dem zu isolierenden Rohr gebildet wird. Wenn der Isolierschlauch nicht bereits geschlitzt ist, wird er einlaufseitig in seiner Längsrichtung aufgeschlitzt und anschließend aufgeweitet. Kurz vor dem Aufbringen auf das Rohr werden die Schlitzflächen durch die Schweißeinrichtung erhitzt und dann in der Rolle mit den Bordscheiben gegeneinander gedrückt und dadurch miteinander verbunden.

Anhand von Zeichnungen wird die Erfindung beispielsweise näher erläutert. Es zeigt
Fig. 1 in einer Seitenansicht eine erste Ausführungsform eines Handgeräts nach der Erfindung,
Fig. 2 in einer Ansicht wie Fig. 1 das Handgerät von Fig. 1 in einer modifizierten Ausgestaltung,
Fig. 3 das Handgerät von Fig. 2 in einer Stirnansicht,
Fig. 4 in einer Ansicht wie Fig. 3 das Handgerät mit weggelassenem Gegenstand,
Fig. 5 in einer Ansicht wie Fig. 1 eine zweite Ausführungsform eines Handgeräts mit Ausklinkelementen, und
Fig. 6 in einer Ansicht wie Fig. 5 das Handgerät beim Einsatz zum Aufbringen eines Isolierschlauchs auf ein Rohr.

Das in den Figuren gezeigte Handgerät 21 hat zwei Seitenwangen 26, die in einem vorgegebenen Abstand zueinander an verschiedenen Stellen durch Distanzbolzen und andere Einrichtungen so aneinander befestigt sind, dass sie sich parallel erstrecken.

Jede Seitenwange 26 hat im wesentlichen die Form eines Trapezes mit einer oberen langen parallelen Trapezseite 29, einer unteren kurzen parallelen Trapezseite 30, einer schutzprofileinlaufseitigen Trapezseite 28 und einer schutzprofilauslaufseitigen Trapezseite 27, die sich über die obere lange parallele Trapezseite 29 in Form eines Ansatzes 49 hinaus erstreckt.

Zwischen dem freien Ende des Ansatzes 49 und dem schutzprofileinlaufseitigen Ende der langen parallelen Trapezseite erstreckt sich ein ergonomisch gestalteter Handgriff 25.

Ein zu schützender Gegenstand 23 mit einer Kante 24 ist in der in den Figuren gezeigten Position angeordnet. Auf die Kante 24 ist ein Schutzprofil 22 aufzubringen, das einen in seiner Längsrichtung verlaufenden Einführungsschlitz für die Kante 24 aufweist. Bei dem gezeigten Ausführungsbeispiel hat das Schutzprofil 22 einen im wesentlichen U-förmigen Querschnitt mit einem Rücken und zwei vom Rücken ausgehenden seitlichen Lippen. Das Schutzprofil 22 ist durch den Raum zwischen den Seitenwangen 26 von der Einlaufseite zur Auslaufseite hindurch geführt.

Wenn das Schutzprofil 22 in das Handgerät 21 eingeführt ist, erstreckt es sich längs einer Rückzugsicherungseinrichtung 46, die von einem Federblatt gebildet wird, das auf der Außenseite jeder Seitewange 26 schutzprofileinlaufseitig festgelegt ist und sich durch eine Öffnung in jeder Seitenwange 26 hindurch bis zu einem Eingriffskontakt an den Außenflächen der Lippen des Schutzprofils 22 erstreckt. Dadurch wird das Schutzprofil 22 zwischen den beiden Federblättern zentriert und gegen ein Herausfallen auf der Schutzprofileinlaufseite gesichert, vor allem wenn es abgeschnitten ist, während sein Vorschub nicht beeinträchtigt wird.

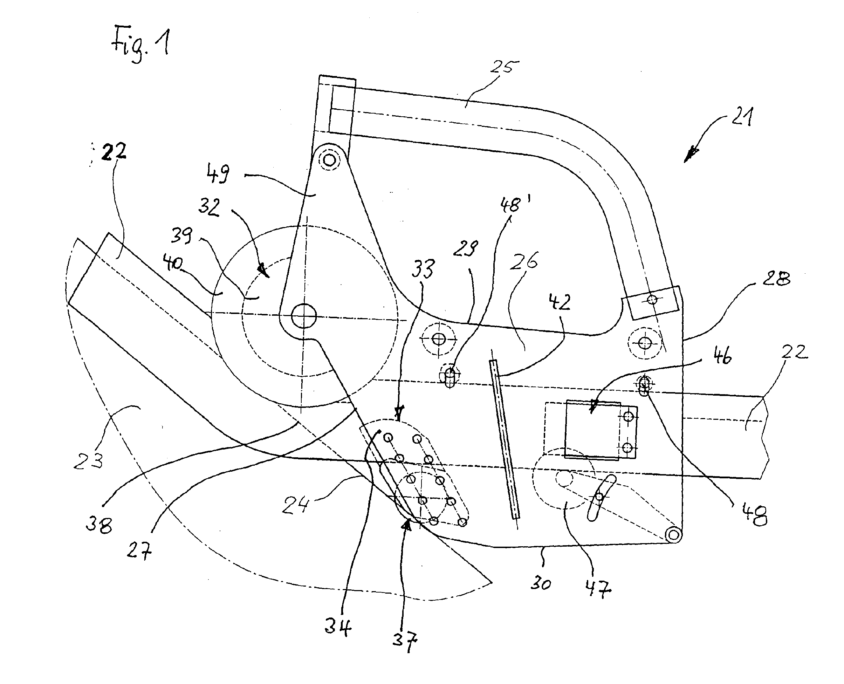

Im Bereich der Rückzugsicherungseinrichtung 46 ist zwischen den Seitenwangen 26 eine weitere Einrichtung zum Öffnen und Führen des Schutzprofils 22 vorgesehen. Diese weitere Einrichtung besteht aus einer Kreisscheibe 47, die in den Raum zwischen den Lippen des Schutzprofils 22 eingreift und deren Position mittels eines an den Seitenwangen 26 angelenkten Stellhebels eingestellt und fixiert werden kann. Zu der Einrichtung gehört ferner eine Leitrolle 48, die mit der Außenseite des Rückens des Schutzprofils 22 in Eingriff steht und deren Position in Fig. 1 vertikal zur Anpassung an unterschiedliche Profilgrößen eingestellt werden kann. Die Kreisscheibe 47 und die Leitrolle 48 sorgen dafür, dass sich das Schutzprofil 22 beim Durchlauf durch das Handgerät 21 nicht verdrehen kann.

In Laufrichtung des Schutzprofils 22 folgt nach den Einrichtungen 46 beziehungsweise 47, 48 in jeder Seitenwange 26 ein sich durch sie hindurch erstreckender Schlitz 42. Die Schlitze 42 der gegenüberliegenden Seitenwangen 26 sind fluchtend zueinander ausgerichtet und überdecken die gesamte Profilgröße, so dass durch Hindurchführen eines Messers durch die Schlitze 42 das Schutzprofil 22 abgeschnitten werden kann. Bei dem gezeigten Ausführungsbeispiel werden dabei schräge Schnittflächen erzielt. Es kann jedoch bei entsprechender Ausgestaltung der Schlitze 42 jede gewünschte Form einer Schnittfläche am Schutzprofil 22 erzeugt werden.

Im in Fig. 1 unteren Bereich, also am schutzprofilauslaufseitigen Ende der unteren kurzen parallelen Trapezseite und der schutzprofilauslaufseitigen Trapezseite 27 ist eine Einrichtung 37 zum Führen des Handgeräts längs der Kante 24 vorgesehen. Es handelt sich dabei bei der gezeigten Ausführungsform um eine Rolle 41 in Form von zwei Kegelstümpfen, die mit ihren Seiten mit dem kleineren Durchmesser aneinander liegen. Dadurch kann die Rolle 41 die Kanten 24 des Gegenstandes 23 unterschiedlicher Dicke sicher längs Führungslinien führen.

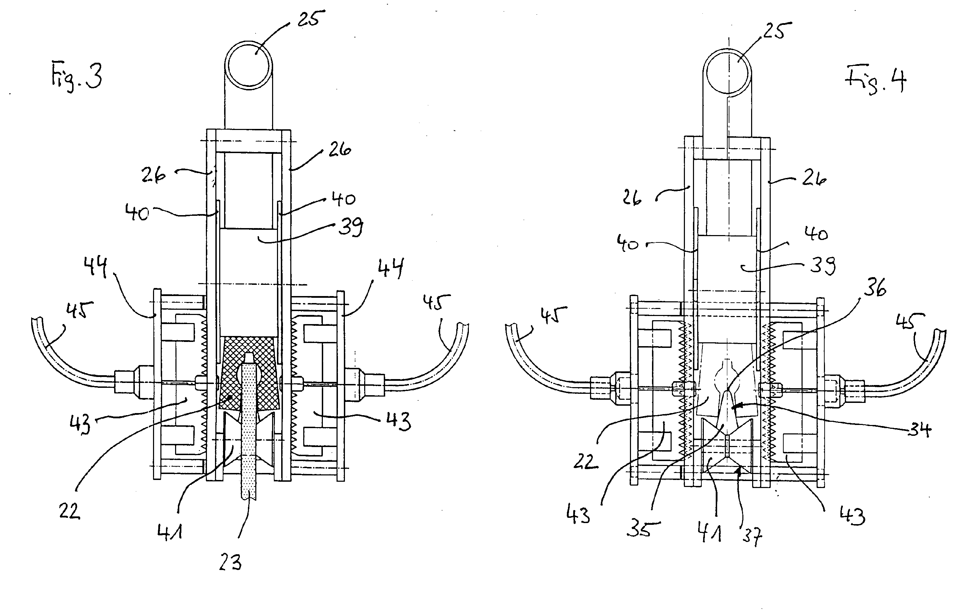

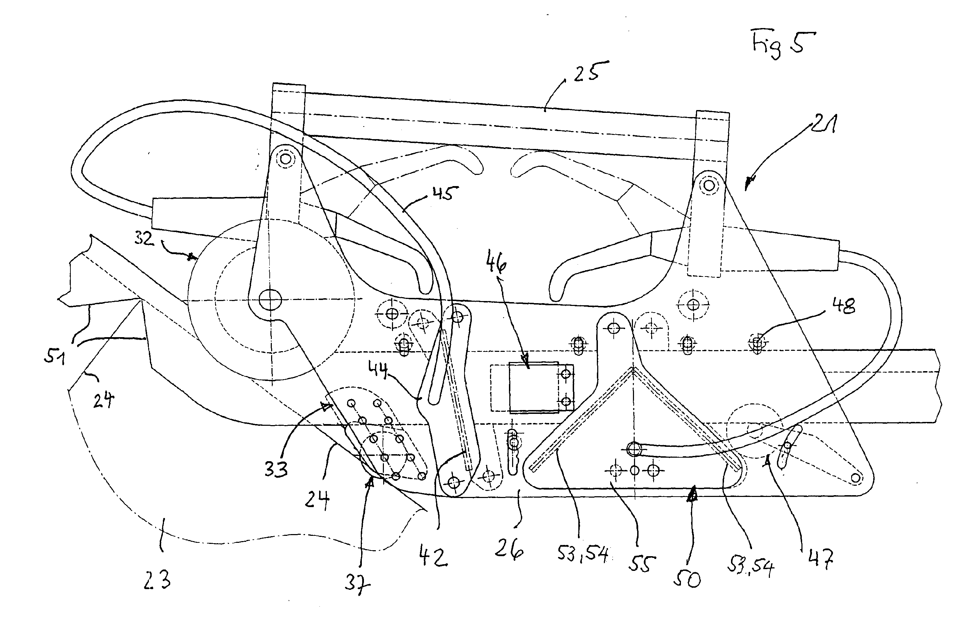

Der Rolle 41 ist in Laufrichtung des Schutzprofils 22 eine Einrichtung 33 zum Öffnen des Schutzprofils nachgeordnet, die von einem Keilelement 34 gebildet wird, das, wie aus Fig. 3 und 4 zu sehen ist, mit seinem breiten, der Rolle 41 zugewandten Teil 35 zwischen den Seitenwangen 26 festgelegt ist und dessen schmales Teil 36 zwischen die Lippen des Schutzprofils 22 ragt.

Dem Keilelement 34 ist eine Einrichtung 32 zum Führen und Anpressen des Schutzprofils 22 auf die Kante 24 zur Profilauslaufseite hin nachgeordnet und zwischen den Seitenwangen 26 im Bereich des schutzprofilauslaufseitigen Endes der oberen langen parallelen Trapezseite 29 angeordnet. Die Einrichtung 32 zum Führen und Anpressen des Schutzprofils 23 auf die Kante 24 wird von einer Rolle 39 gebildet, deren Stirnseiten jeweils eine Bordscheibe 40 zugeordnet ist. Der radiale Abstand zwischen dem Außenumfang der Rolle 39 und dem Außenumfang jeder Bordscheibe 40 entspricht in etwa der Stärke des Rückens des eingesetzten Schutzprofils 22. Die Bordscheiben 40 sind in Richtung der Achse der Rolle 39 auslenkbar und somit an die sich beim Aufweiten ändernde Profilbreite anpassbar.

Die Eingriffstiefe des Keilelements 34 zwischen die Lippen des Schutzprofils 22 ist einstellbar, was durch eine Vielzahl von Bohrungen in Fig. 1 und 2 sowie 5 und 6 dargestellt ist.

Das schutzprofilauslaufseitige Ende des Keilelements 34 darf nicht in Kontakt mit der Kante 24 des zu schützenden Gegenstandes 23 kommen, da ansonsten Beschädigungen auftreten könnten. Deshalb ist die Erstreckung des schutzprofilauslaufseitigen Endes des Keilelements 23 so beschränkt, dass es vor der Tangente endet, die sich zwischen der Innenseite des Rückens des Schutzprofils 22 und der jeweiligen Führungslinie der Rolle 41 zum Führen des Handgeräts 1 an der Kante 24 erstreckt, d.h. dass ein Sicherheitsabstand zur Kante 24, die im wesentlichen dieser Tangente entspricht, besteht.

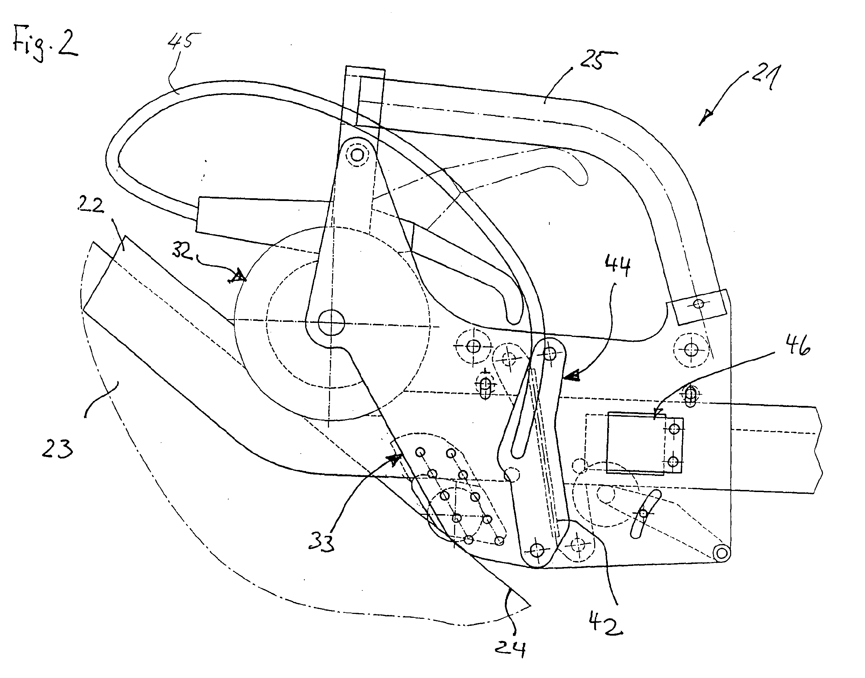

Die Ausgestaltung des Handgeräts 21 von Fig. 1. entspricht im wesentlichen der von Fig. 2 mit der Ergänzung, dass auf der Außenseite jeder Seitenwange 26 eine Betätigungseinrichtung 44 vorgesehen ist, die, wie in Fig. 3 und 4 zu sehen ist, jeweils ein Messer 43 trägt, das über die Betätigungseinrichtung 44 durch den zugehörigen Schlitz 42 in der entsprechenden Seitenwange 26 zum Durchschneiden des Schutzprofils 22 hindurchführbar ist. Gemäß Fig. 3 und 4 sind die Schneidkanten der Messer 43 gezackt, was die erforderliche Schneidkraft wesentlich verringert. Die Betätigungseinrichtung 44 wird über einen Bowdenzug aktiviert, der schematisch mit 45 angegeben ist und zwischen zwei Stellungen bewegt werden kann, nämlich einer Ruhestellung und einer Schneidstellung, die in Fig. 2 ausgezogen beziehungsweise strichpunktiert gezeigt sind.

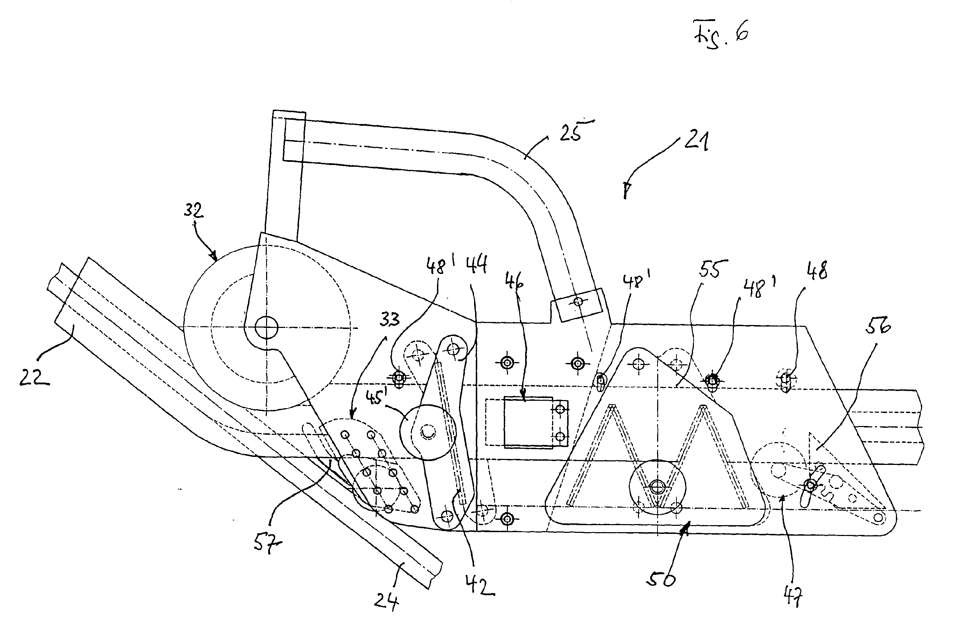

In der Ausgestaltung von Fig. 5 ist das Handgerät der Figuren 1 bis 4 durch eine schutzprofileinlaufseitig vorgesehene Einrichtung 50 zum Ausklinken von Segmenten 51 aus den Lippen des Schutzprofils 22 ergänzt.

Die Einrichtung 50 besteht aus einer jeder Seitenwange 26 zugeordneten Betätigungseinrichtung 55, von denen jede ein Messer 54 trägt, dem ein entsprechender Schlitz in der Seitenwange 26 zugeordnet ist. Bei der gezeigten Ausführungsform sind zwei Messer 54 vorgesehen, die in einem rechtwinkligen Scheitel ineinander übergehen, wodurch das in Fig. 5 links gezeigte Segment 51 aus dem Schutzprofil 22 ausgeschnitten werden kann. Wie aus Fig. 5 zu sehen ist, ist jeder Betätigungseinrichtung 55 ein Bowdenzug mit Betätigungsgriff zugeordnet. Die weitere Einrichtung 47, 48 zum Führen und Öffnen des Schutzprofils 22 ist dabei auf der Schutzprofileinlaufseite der Einrichtung 50 vorgesehen.

In der Ausgestaltung von Fig. 6 wird mit dem Handgerät 21 ein Isolierschlauch 22 auf ein Rohr 24 aufgebracht, wobei der Isolierschlauch einlaufseitig durch ein Schlitzmesser 56 aufgeschlitzt wird, nach dem Aufweiten mittels einer Schweiß- beziehungsweise Heizeinrichtung 57 an den Schnittflächen erhitzt und nach dem Herumlegen um das Rohr 24, was genauso vor sich geht wie das Aufbringen des Schutzprofils 22 auf die Kante 24 des Gegenstands 23 - längs der erhitzten Schnittflächen mit Hilfe der Einrichtung 32 zum Anpressen und Führen zu einem Ganzen wieder verbunden wird. Der Isolierschlauch kann mit Hilfe von Messern abgeschnitten werden, für die wenigstens ein Schlitz 42 und eine Betätigungseinrichtung 44 vorgesehen sind, wobei die Aktivierung über pneumatische oder hydraulische Zylinder 45' erfolgen kann.

Die Einrichtung 50 zum Ausklinken von Segmenten hat eine Messeranordnung, die das Ausklinken von solchen Segmenten ermöglicht, dass der Isolierschlauch sich um Rohrbogen herum erstrecken kann.

Für die sichere Führung des Schutzprofils 22 durch das Handgerät 21 sind in der Schutzprofildurchlaufrichtung beabstandete weitere höhenverstellbare Leitrollen 48' für den Eingriff mit dem Rücken des Schutzprofils 22 vorgesehen.

## Patentansprüche

1. Handgerät (21) zum Aufbringen eines Schutzprofils (22) aus elastischem Material auf Kanten (24) eines zu schützenden Gegenstandes (23), wofür das Schutzprofil (22) mit einem in seiner Längsrichtung verlaufenden Einführschlitz versehen ist, und wobei das Handgerät (21)
- zwei im festgelegtem Abstand im wesentlichen parallel zueinander festgelegte Seitenwangen (26), zwischen denen das Schutzprofil (22) von einer Schutzprofileinlaufseite (28) zu einer Schutzprofilauslaufseite (27) transportiert wird,
- einen mit den Seitenwangen (26) verbundenen Handgriff (25),
- eine schutzprofileinlaufseitig vorgesehene Führungseinrichtung (47, 48) für das Schutzprofil (22),
- eine schutzprofilauslaufseitig zwischen den Seitenwangen (26) drehbar gelagerte Rolle (39) mit seitlichen Bordscheiben (40) zum Führen und Anpressen des Schutzprofils (22) auf und an die Kante (24) des zu schützenden Gegenstandes (23),
- eine eine Rolle (41) aufweisende Einrichtung (37) zum Führen des Handgeräts (21) an der Kante (24) des zu schützenden Gegenstands (23),
- eine schutzprofileinlaufseitig an dem Schutzprofil (22) angreifende Rückzugsicherungseinrichtung (46) und
- Einrichtungen (42, 43; 50) zum Ein- und/oder Durchschneiden des Schutzprofils (22) aufweist,
**dadurch gekennzeichnet,**
- **dass** zum Öffnen des Einführschlitzes des Schutzprofils (22) zwischen der die Bordscheiben (40) aufweisenden Rolle (39) und der Rolle (41) zum Führen des Handgeräts (21) an der Kante (24) ein Keilelement (34) angeordnet ist, das mit seinem breiten Teil zwischen den Seitenwangen (26) festgelegt ist und sich mit seinem schmalen Teil (36) in den Einführschlitz des Schutzprofils (22) erstreckt,
- **dass** die seitlichen Bordscheiben (40) in Richtung der Achse ihrer Rolle (39) auslenkbar sind und
- **dass** die Rolle (41) der Einrichtung (34) zum Führen des Handgeräts (21) an der Kante (24) des zu schützenden Gegenstands (23) die Form von zwei Kegelstümpfen hat, die mit ihren Flächen mit den kleineren Durchmessern aneinander liegen.

2. Handgerät nach Anspruch 1, **dadurch gekennzeichnet, dass** die Eingrifftiefe des Keilelements (34) in den Einführschlitz des Schutzprofils (22) in einer zu den Ebenen der Seitenwangen (26) parallelen Ebene einstellbar ist.

3. Handgerät nach Anspruch 1 oder 2, **dadurch gekennzeichnet, dass** die Einrichtungen (42, 43; 50) zum Ein- und/oder Durchschneiden des Schutzprofils (22) in den Seitenwangen (26) zwischen der Schutzprofilauslaufseite (27) und der Schutzprofileinlaufseite (28) vorgesehene, miteinander fluchtende und wenigstens die Schutzprofilgröße überdeckende Messerschlitze (42, 53) aufweisen, denen auf wenigstens einer Seitenwange (26) ein Messer (43, 54) mit einer Betätigungseinrichtung (44, 55) zugeordnet ist, die das Messer (43, 54) im wesentlichen senkrecht zur Seitenwange (26) verschiebt.

4. Handgerät nach einem der vorhergehenden Ansprüche, **dadurch gekennzeichnet, dass** die Rückzugsicherungseinrichtung (46) ein Federblatt ist, das von wenigstens einer Seitenwange (26) in den Raum zwischen den Seitenwangen (26) für den Eingriff mit dem Schutzprofil (22) so vorsteht, dass das Schutzprofil (22) von der Schutzprofileinlaufseite (28) zur Schutzprofilauslaufseite (27) führbar und gegen ein Herausfallen auf der Schutzprofileinlaufseite gesichert ist.

5. Handgerät nach einem der vorhergehenden Ansprüche, **dadurch gekennzeichnet, dass** jeder Seitenwange (26) ein Messer (43) zugeordnet ist und dass sich die beiden Messer (43) beim Schneiden überlappen.

6. Handgerät nach einem der vorhergehenden Ansprüche, **dadurch gekennzeichnet, dass** zur Zentrierung des Schutzprofils (22) jeder Seitenwange (26) ein Federblatt als Rückzugsicherungseinrichtung (46) zugeordnet ist.

7. Handgerät nach einem der vorhergehenden Ansprüche, **dadurch gekennzeichnet, dass** die Führungseinrichtung (47, 48) für das Schutzprofil (22) eine für einen Eingriff in den Einführschlitz des Schutzprofils (22) vorgesehene Kreisscheibe (47) und wenigstens eine Leitrolle (48) aufweist, die für den Eingriff mit der Außenseite des Schutzprofils (22) zu dessen Durchlaufrichtung senkrecht verstellbar angeordnet ist.

8. Handgerät nach Anspruch 7, **dadurch gekennzeichnet, dass** die Kreisscheibe (47) in einer zu den Ebenen der Seitenwangen (26) parallelen Ebene verstellbar ist.

9. Handgerät nach einem der vorhergehenden Ansprüche, **dadurch gekennzeichnet, dass** die Einrichtungen zum Einschneiden in das Schutzprofil Einrichtungen (50) zum Ausklinken von Segmenten (51) aus den Seiten des Schutzprofils (22) aufweisen, die zwischen den Messerschlitzen (43) der Schneideinrichtung (42, 43, 44) und der schutzprofileinlaufseitigen Führungseinrichtung (47, 48) für das Schutzprofil (22) angeordnet sind, wobei den auszuklinkenden Segmenten (23) entsprechende Schlitze (53) in den Seitenwangen (26) ausgebildet sind, denen Betätigungseinrichtungen (55) für eine im wesentlichen senkrechte Bewegung der Messer (54) zu den Seitenwangen (26) zugeordnet sind.

10. Handgerät nach einem der Ansprüche 3 bis 9, **dadurch gekennzeichnet, dass** die Betätigungseinrichtungen (44, 55) einen mechanischen, hydraulischen, pneumatischen oder elektromechanischen Antrieb aufweisen.

11. Handgerät nach Anspruch 10, **dadurch gekennzeichnet, dass** der Antrieb (43, 54) ein Bowdenzug (45) ist.

12. Handgerät nach einem der vorhergehenden Ansprüche, **dadurch gekennzeichnet, dass** die Seitenwangen (26) im wesentlichen die Form von gleichen Trapezen mit einer langen parallelen Trapezseite (29), mit einer kurzen parallelen Trapezseite (30), mit einer schutzprofileinlaufseitigen Trapezseite (28) und einer schutzprofilauslaufseitigen Trapezseite (27) aufweisen und dass sich der Handgriff (25) oberhalb der langen parallelen Trapezseite (29) von der schutzprofileinlaufseitigen Trapezseite (28) bis zu einem Ansatz (49) an den Seitenwangen (26) oberhalb ihrer schutzprofilauslaufseitigen Trapezseite (27) erstreckt.

13. Handgerät nach einem der vorhergehenden Ansprüche, **dadurch gekennzeichnet, dass** bei Verwendung eines Isolierschlauchs als Schutzprofil (22) und eines Rohres als zu schützender Gegenstand (23) das Handgerät (21)
- eine Einrichtung (56) zum Ausbilden des durchgehenden Längsschlitzes in dem Isolierschlauch, die in Durchlaufrichtung des Isolierschlauchs der schutzprofileinlaufseitigen Führungseinrichtung (47, 48) für das Schutzprofil (22) vorgeordnet ist, sowie
- zwischen dem Keilelement (34) und der die Bordscheiben (40) aufweisenden Rolle (39) eine Einrichtung (57) zum Erhitzen der durch den Längsschlitz gebildeten Schlitzflächen und für deren anschließende Schweißverbindung aufweist.
